# EUROPEAN PATENT SPECIFICATION

(11) **EP 3 124 561 B1**
(45) Date of publication and mention of the grant of the patent: **27.02.2019**
(21) Application number: 15768535.5
(22) Date of filing: 26.03.2015
(51) Int. Cl.: C09D 11/36, B41J 2/01, B41M 5/00, C09D 11/101, C09D 11/322

(54) **ACTIVE ENERGY RAY-CURABLE INKJET INK**
MIT AKTIVEN ENERGIESTRAHLEN HÄRTBARE TINTENSTRAHLTINTE
ENCRE POUR JET D'ENCRE DURCISSABLE SOUS L'ACTION D'UN RAYONNEMENT D'ENERGIE ACTIVE

(30) Priority: 26.03.2014 JP 2014062942
(43) Date of publication of application: 01.02.2017
(73) Proprietor: Toyo Ink SC Holdings Co., Ltd., Tokyo 104-8377 (JP); Toyo Ink Co., Ltd., Tokyo 104-8378 (JP)
(72) Inventor: KONDA, Yohei, Tokyo 104-8378 (JP)
(74) Representative: Grünecker Patent- und Rechtsanwälte PartG mbB
(86) International application number: PCT/JP2015/059403
(87) International publication number: WO 2015/147177

(56) References cited:
- WO-A1-2014/175440
- JP-A- H1 077 432
- JP-A- 2000 007 967
- JP-A- 2000 273 376
- JP-A- 2012 102 294
- JP-A- 2012 102 294
- JP-A- 2012 193 261
- JP-A- 2013 104 011
- JP-A- 2013 199 603
- JP-A- 2014 051 605
- JP-A- 2014 109 007
- JP-A- 2014 109 008
- JP-A- 2014 172 956

## Description

### TECHNICAL FIELD

The present invention relates to an active energy ray-curable inkjet ink having very high curability and discharge stability, and adhesion to various base materials.

### BACKGROUND ART

An inkjet printing system forms images and characters on a printing base material by jetting and depositing microscopic droplets of an ink composition from the inkjet head on the base material. This inkjet printing system requires no printing plate during printing. An electrographic system is widely known as a printing system which requires no printing plate. However, the inkjet printing system is advantageous to the electrographic system in the initial cost of the apparatus, running cost during printing, apparatus size, and high-speed printing properties.

Various ink compositions such as solvent-based, water-based, and oil-based ones have been conventionally used for printing by the inkjet printing system. However, in recent years, the demand for active energy ray-curable inkjet ink is increasing. The reason for this is the advantages that active energy ray-curable inkjet inks are applicable to unabsorbent base materials such as plastic and glass, and can reduce environment loads by decreasing the volatilization amount of the solvent. In particular, in industrial printing, in addition to the above-described advantages, from the viewpoints of water resistance of the printed materials, drying energy of the ink, and adhesion of ink components to the head by drying of the ink, replacement of solvent-based and water-based inks with active energy ray-curable inkjet inks is expected.

In addition, in recent years, with the improvement in performance of inkjet heads, the application of the inkjet printing system to the existing printing market using offset printing is expected. In the existing print market, productivity is very important. However, desired productivity is hard to be achieved by the multi-pass printing system used in the sign market. Therefore, in the existing printing market, the use of the single-pass printing system allowing high-speed printing is preferred, thereby achieving productivity which cannot be obtained by the multi-pass printing system using the inkjet printing system.

Furthermore, most base materials used in the sign market are vinyl chloride sheets. However, in the existing printing market, various base materials such as various kinds of coated paper and films are used. However, ink spreadability and adhesion to the base material depend on the type of the base materials. Therefore, in order to allow the application of the same ink to various base materials, the printing quality such as printing images must be kept at a certain level or higher for any base materials. Active energy ray-curable inkjet inks which allow high-speed printing, and secure adhesion to many base materials are most suitable for achieving productivity and versatility at the same time.

In the single-pass printing system allowing high-speed printing, the ink is preferably designed to have an optimum low viscosity range, thereby smoothly discharging the ink from the inkjet head. Therefore, the ink is generally designed using a low viscosity monomer.

However, low viscosity polymerizable monomers have strong skin irritancy, so that preferred types and amounts are extremely limited.

Therefore, Patent Literature 1 discloses a method for achieving a low viscosity through the addition of an organic solvent to the composition of an active energy ray-curable inkjet ink. However, the printing described in Patent Literature 1 requires the process of drying the organic solvent by heating. Therefore, it causes problems of reduction of advantages of active energy ray-curable inkjet inks such as high-speed curability and reduction of drying cost.

Patent Literature 2 discloses an ink which contains 2-(2-vinyloxyethoxy)ethyl acrylate, a photosensitive monomer as a reactive diluent, and an acrylic resin for imparting adhesion to various base materials and light resistance. However, the use of an acrylic resin tends to inhibit the viscosity reduction of the inkjet ink itself, and thus has problems with discharge stability during high-speed printing.

### CITATION LIST

### PATENT LITERATURE

Patent Literature 1: JP 2013-502479 A
Patent Literature 2: JP 2008-280383 A

JP 2012-102294 A discloses an ultraviolet curable inkjet ink composition comprising an aluminum pigment being a plate-like particle, phenoxyethyl (meth)acrylate, and an organic solvent in an amount of from 2 to 30 mass% based on the total mass of the ink composition.

WO 2014/175440 A1 discloses an actinic energy ray-curable white ink for inkjet printing, said ink comprising titanium oxide, a pigment dispersant, and a polymerizable compound.

### SUMMARY OF INVENTION

### PROBLEMS TO BE SOLVED BY THE INVENTION

The present invention is intended to provide an active energy ray-curable inkjet ink which has very high curability and discharge stability, and adhesion to various base materials.

### MEANS TO SOLVE THE PROBLEMS

As described above, Patent Literature 1 describes the method for adding an organic solvent for the purpose of adjusting the ink viscosity. In addition, Patent Literature 2 describes that an organic solvent may be added to ink for the purpose of adjusting the film thickness. On the other hand, in the present invention, a specific organic solvent is systematically used in a specified amount, thereby imparting curability, discharge stability, and adhesion to various base materials to ink. Therefore, the inventions described in Patent Literatures 1 and 2 and the technical idea of the present invention of the application are basically different.

Specifically, an active energy ray-curable inkjet ink according to the present invention contains an organic solvent having a boiling point of 140°C to 300°C, a polymerizable monomer containing 2-(2-vinyloxyethoxy)ethyl acrylate, and a pigment, wherein the content of the organic solvent is from 0.1 to 10% by weight with reference to the total weight of the ink, and wherein the pigment comprises one or more pigments selected from the group consisting of carbon black, and an organic pigment.

The organic solvent used in the invention contains at least one selected from the group consisting of the organic solvents represented by any of the following general formulae (1) to (7), alkanediols, and cyclic ethers,

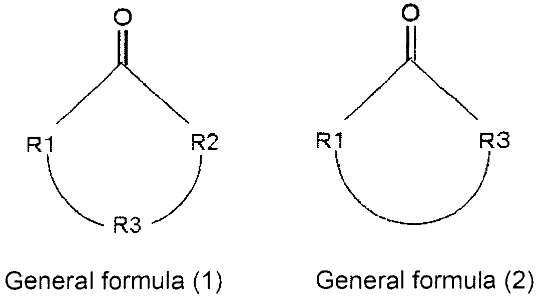

R₇-(OX¹)ₓ-O-R₈ General formula (3)

R₉-(OX¹)ₓ-COOCH₃ General formula (4)

CH₃CO(OX¹)ₓOCOCH₃ General formula (5)

CₓH₂ₓ₊₁-O-COCH(CH₃)OH General formula (6)

R₁₀-O-C₂H₄-CON(R₁₁)₂ General formula (7)

In each of the formulae, R₁ and R₂ are each independently -NR₆- or an oxygen atom,
R₃ is a hydrocarbon group represented by CₘHₙ, m is an integer of 2 to 8, n represents an integer of 2m-4, 2m-2, or 2m, the hydrocarbon group may have a branched structure, and
R₆ represents an alkyl group having 1 to 3 carbon atoms, a hydroxyalkyl group, a hydroxyl group, or a hydrogen atom.
R₇, R₉, R₁₀, and R₁₁ represent a hydrocarbon group composed of single bonds only and having 1 to 5 carbon atoms, and may have a branched structure.
R₈ represents a hydrogen atom or a hydrocarbon group composed of single bonds only and having 1 to 5 carbon atoms, and may have a branched structure.
X¹ represents a hydrocarbon group composed of single bonds only and having 2 to 4 carbon atoms, and may have a branched structure.
x represents an integer of 1 to 4.

It is preferable that the polymerizable monomer further contains a polymerizable monomer having an ethylene oxide-modified or propylene oxide-modified skeleton other than the 2-(2-vinyloxyethoxy)ethyl acrylate. Furthermore, it is preferable that the polymerizable monomer contains a monofunctional monomer in an amount of 50% by weight or less with reference to the total weight of the ink.

Furthermore, it is preferable that the content of the organic solvent is from 0.2 to 4 % by weight with reference to the total weight of the ink. It is also preferable that the polymerizable monomer having an ethylene oxide-modified or propylene oxide-modified skeleton other than the 2-(2-vinyloxyethoxy)ethyl acrylate is a polyfunctional monomer, and the amount of the polyfunctional monomer other than the 2-(2-vinyloxyethoxy)ethyl acrylate is 20 % by weight or more with reference to the total weight of the ink.

Furthermore, it is preferable that the polymerizable monomer further comprises dipropylene glycol di(meth)acrylate. It is also preferable that the organic solvent comprises at least one selected from the group consisting of the organic solvents represented by any one of the general formulae (3), (4) and (5).

Moreover, the present invention provides an active energy ray-curable inkjet clear ink comprising an organic solvent having a boiling point of 140°C to 300°C, and a polymerizable monomer containing 2-(2-vinyloxyethoxy)ethyl acrylate,
wherein a content of the organic solvent is from 0.1 to 10% by weight with reference to the total weight of the ink, and
wherein the organic solvent comprises at least one selected from the group consisting of the organic solvent represented by any of the following general formulae (1) to (7), alkanediols, and cyclic ethers,

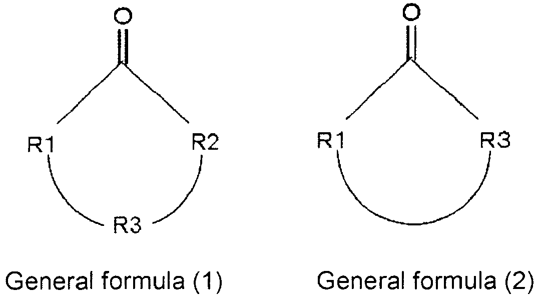

R₇-(OX¹)ₓ-O-R₈ General formula (3)

R₉-(OX¹)ₓ-COOCH₃ General formula (4)

CH₃CO(OX¹)ₓOCOCH₃ General formula (5)

CₓH₂ₓ₊₁-O-COCH(CH₃)OH General formula (6)

R₁₀-O-C₂H₄-CON(R₁₁)₂ General formula (7)

wherein R₁ and R₂ are each independently -NR₆- or an oxygen atom,
R₃ is a hydrocarbon group represented by CₘHₙ, m represents an integer of 2 to 8, n represents an integer of 2m-4, 2m-2, or 2m, the hydrocarbon group may have a branched structure, and
R₆ represents an alkyl group having 1 to 3 carbon atoms, a hydroxyalkyl group, a hydroxyl group, or a hydrogen atom;
R₇, R₉, R₁₀, and R₁₁ represent a hydrocarbon group composed of single bonds only and having 1 to 5 carbon atoms, and may have a branched structure;
R₈ represents a hydrogen atom or a hydrocarbon group composed of single bonds only and having 1 to 5 carbon atoms, and may have a branched structure;
X¹ represents a hydrocarbon group composed of single bonds only and having 2 to 4 carbon atoms, and may have a branched structure;
x represents an integer of 1 to 4.

### ADVANTAGEOUS EFFECTS OF INVENTION

The present invention provides an active energy ray-curable inkjet ink which has excellent curability, high discharge stability, and excellent adhesion to various base materials.

### BEST MODE FOR CARRYING OUT THE INVENTION

The active energy ray-curable inkjet ink of the present invention is described below in detail. In the following description, unless otherwise noted, the term "ink" means "active energy ray-curable inkjet ink". In addition, "part" means " part by weight", and "%" means "% by weight".

### <Organic solvent>

The ink of the present invention contains an organic solvent having a boiling point of 140 to 300°C. The use of an organic solvent having a boiling point of 140°C or higher is preferred for achieving excellent inkjet discharge stability. On the other hand, the use of an organic solvent having a boiling point of 300°C or lower is preferred for achieving excellent drying property of the ink coating film. According to the present invention, the use of an organic solvent having a boiling point of 140 to 300°C allows to compose an ink having excellent curability and discharge stability, and excellent adhesion to various base materials. In the present invention, the organic solvent is intended to a compound having no polymerizable substituent in the molecule. More specifically, the organic solvent is intended to contain no polymerizable monomer. The boiling point of the organic solvent used in the present invention is preferably from 140 to 270°C, and more preferably from 160 to 260°C.

The organic solvent used in the invention contains at least one non-hydrocarbon organic solvent selected from the group consisting of the organic solvents represented by any of the following general formulae (1) to (7), alkanediols, and cyclic ethers.

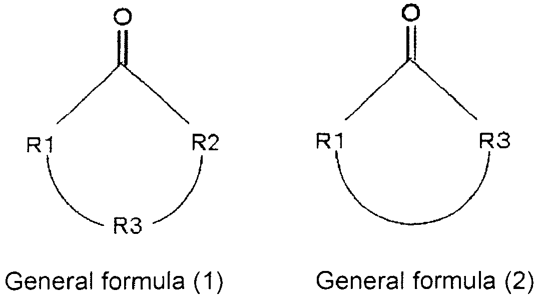

R₇-(OX¹)ₓ-O-R₈ General formula (3)

R₉-(OX¹)ₓ-COOCH₃ General formula (4)

CH₃CO(OX¹)ₓOCOCH₃ General formula (5)

CₓH₂ₓ₊₁-O-COCH(CH₃)OH General formula (6)

R₁₀-O-C₂H₄-CON(R₁₁)₂ General formula (7)

In each of the formulae, R₁ and R₂ are each independently -NR₆- or an oxygen atom,
R₃ is a hydrocarbon group represented by CₘHₙ, m represents an integer of 2 to 8, and n represents any integer of 2m-4, 2m-2, or 2m, the hydrocarbon group may have a branched structure, and
R₆ represents an alkyl group having 1 to 3 carbon atoms, a hydroxyalkyl group, a hydroxyl group, or a hydrogen atom.
R₇, R₉, R₁₀, and R₁₁ represents a hydrocarbon group having 1 to 5 carbon atoms composed of single bonds only, and may have a branched structure.
R₈ represents a hydrogen atom or a hydrocarbon group having 1 to 5 carbon atoms composed of single bonds only, and may have a branched structure.
X¹ represents a hydrocarbon group having 2 to 4 carbon atoms composed of single bonds only, and may have a branched structure.
x represents an integer of 1 to 4.

In one embodiment of the ink, the non-hydrocarbon organic solvent may be used alone, or in combination of two or more of them. In order to further improve discharge stability, the organic solvent preferably has a viscosity of 15 mPa·s or less in the environment of 25°C.

Specific examples of the organic solvent represented by the general formula (1) include the following compounds shown in the Table 1.

**Table 1**

| Compound | Structural formula | Compound | Structural formula |
|---|---|---|---|
| 1 | 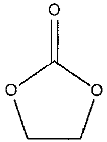 | 8 | 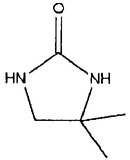 |
| 2 | 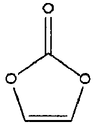 | 9 | 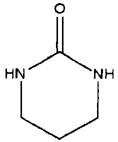 |
| 3 | 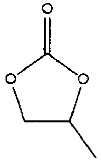 | 10 | 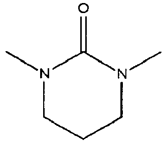 |
| 4 | 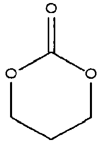 | 11 | 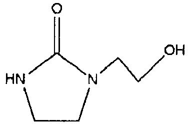 |
| 5 | 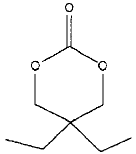 | 12 | 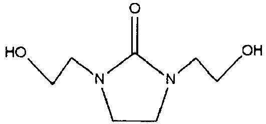 |
| 6 | 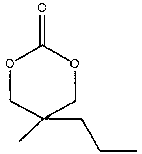 | 13 | 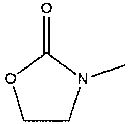 |
| 7 | 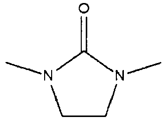 | 14 | 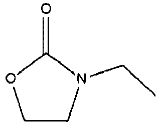 |

Among the organic solvents represented by the general formula (1), oxygen-containing solvents such as ethylene carbonate (compound 1, boiling point 244°C), propylene carbonate (compound 3, boiling point 240°C), and 1,2-butylene carbonate (boiling point 251°C), and organic solvents having an oxazolidinone structure, such as 3-methyl-2-oxazolidinone (compound 13, boiling point 266°C), and 3-ethyl-2-oxazolidinone (compound 14). Among these organic solvents, at least one selected from the group consisting of propylene carbonate, 3-methyl-2-oxazolidinone, and 3-ethyl-2-oxazolidinone is more preferred.

One embodiment of the organic solvent represented by the general formula (2) includes at least one selected from the group consisting of solvents having a lactam structure, solvents having a lactone structure, and oxygen-containing solvents.

Examples of the solvent having a lactam structure include 2-pyrrolidone (γ-butyrolactam), 1-methyl-2-pyrrolidone, 1-ethyl-2-pyrrolidone, γ-valerolactam, γ-hexalactam, γ-heptalactam, γ-octalactam, γ-nonalactam, γ-decalactam, γ-undecalactam, δ-valerolactam, δ-hexalactam, δ-heptalactam, δ-octalactam, δ-nonalactam, δ-decalactam, δ-undecalactam, and ε-caprolactam.

Examples of the solvent having a lactone structure include γ-butyrolactone, γ-valerolactone, γ-caprolactone, γ-caprylolactone, γ-laurolactone, γ-lactone, γ-hexalactone, γ-heptalactone, γ-octalactone, γ-nonalactone, γ-decalactone, γ-undecalactone, δ-valerolactone, δ-hexalactone, δ-heptalactone, δ-octalactone, δ-nonalactone, δ-decalactone, δ-undecalactone, ε-caprolactone, and ε-lactone.

Among the organic solvents represented by the general formula (2), the use of at least one selected from the group consisting of 2-pyrrolidone (γ-butyrolactam) (boiling point 245°C), 1-methyl-2-pyrrolidone (boiling point 202°C), ε-caprolactam (boiling point 267°C), γ-butyrolactone (boiling point 204°C), γ-valerolactone (boiling point 230°C), and ε-caprolactone (boiling point 237°C) is preferred. When any of these organic solvents is used, excellent ink stability and adhesion to various base materials are easily achieved.

In one embodiment of the organic solvent having the cyclic structure represented by the general formulae (1) to (2), from the viewpoints of solubility of the photopolymerization initiator and discharge stability, the organic solvent preferably has a cyclic structure of 7-membered ring or lower, and more preferably has a cyclic structure of 5 to 7-membered ring. The boiling point of the organic solvent having the cyclic structure represented by the general formulae (1) to (2) is preferably from 160 to 300°C, more preferably from 180 to 300°C, and even more preferably from 200 to 280°C.

The organic solvent having the cyclic structure has excellent solubility for the polymerization initiator, sensitizer, and other additives in the ink composition, and is preferred for improving curability of the coating film. It is also preferred because it improves reactivity with 2-(2-vinyloxyethoxy)ethyl acrylate, owing to the polarity of the heterocyclic structure.

One embodiment of the organic solvent represented by the general formula (3) includes alkylene glycol monoalkyl ether, and/or alkylene glycol dialkyl ether.

Specific examples of alkylene glycol monoalkyl ether include ethylene glycol monoethyl ether, ethylene glycol monoisopropyl ether, ethylene glycol monobutyl ether, ethylene glycol monoisobutyl ether, ethylene glycol monohexyl ether, ethylene glycol mono-2-ethylhexyl ether, ethylene glycol monoallyl ether, ethylene glycol monophenyl ether, ethylene glycol monobenzyl ether, propylene glycol monomethyl ether, propylene glycol monoethyl ether, propylene glycol monopropyl ether, propylene glycol monobutyl ether, propylene glycol monophenyl ether, diethylene glycol monomethyl ether, diethylene glycol monoethyl ether, diethylene glycol monobutyl ether, diethylene glycol mono-2-ethylhexyl ether, diethylene glycol monophenyl ether, diethylene glycol monobenzyl ether, dipropylene glycol monomethyl ether, dipropylene glycol monoethyl ether, dipropylene glycol monobutyl ether, dipropylene glycol n-propyl ether, triethylene glycol monomethyl ether, triethylene glycol monoethyl ether, triethylene glycol monobutyl ether, polyethylene glycol monomethyl ether, tripropylene glycol monomethyl ether, tripropylene glycol monobutyl ether, tetraethylene glycol monobutyl ether, and polyethylene glycol monomethyl ether.

Among the alkylene glycol monoalkyl ethers, at least one selected from the group consisting of diethylene glycol monobutyl ether (boiling point 230°C, surface tension 29.1 mN/m), dipropylene glycol monomethyl ether (boiling point 190°C, surface tension 27.9 mN/m), and dipropylene glycol monobutyl ether (boiling point 230°C, surface tension 28.8 mN/m) is preferred.

Specific examples of the alkylene glycol dialkyl ether include ethylene glycol diethyl ether, ethylene glycol dimethyl ether, ethylene glycol ethyl methyl ether, diethyleneglycol dimethyl ether, diethylene glycol diethyl ether, diethylene glycol-di-n-propyl ether, diethylene glycol-di-iso-propyl ether, diethylene glycol dibutyl ether, diethylene glycol methyl ethyl ether, diethylene glycol methylbutyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, polyethylene glycol dimethyl ether, propylene glycol dimethyl ether, propylene glycol diethyl ether, dipropylene glycol dimethyl ether, dipropylene glycol diethyl ether, and tripropylene glycol dimethyl ether.

Among the alkylene glycol dialkyl ethers, at least one selected from the group consisting of diethylene glycol diethyl ether (boiling point 189°C, surface tension 25.1 mN/m), diethylene glycol methyl ethyl ether (boiling point 176°C, surface tension 26.8 mN/m), diethylene glycol dibutyl ether (boiling point 254°C, surface tension 24.9 mN/m), triethylene glycol dimethyl ether (boiling point 216°C, surface tension 30.0 mN/m), and tetraethylene glycol dimethyl ether (boiling point 275°C, surface tension 31.8 mN/m), and tripropylene glycol dimethyl ether (boiling point 215°C, surface tension 26.4 mN/m) is preferred.

One embodiment of the organic solvent represented by the general formula (4) includes alkylene glycol monoalkyl ether acetate. Specific examples of the compound include ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, ethylene glycol monopropyl ether acetate, propylene glycol monomethyl ether acetate, propylene glycol monoethyl ether acetate, propylene glycol monobutyl ether acetate, dipropylene glycol monomethyl ether acetate, dipropylene glycol monoethyl ether acetate, dipropylene glycol monobutyl ether acetate, ethylene glycol monomethyl ether propionate, ethylene glycol monoethyl ether propionate, ethylene glycol monobutyl ether propionate, diethylene glycol monomethyl ether propionate, diethylene glycol monoethyl ether propionate, diethylene glycol monobutyl ether propionate, propylene glycol monomethyl ether propionate, dipropylene glycol monomethyl ether propionate, ethylene glycol monomethyl ether butylate, ethylene glycol monoethyl ether butylate, ethylene glycol monobutyl ether butylate, diethylene glycol monomethyl ether butylate, diethylene glycol monoethyl ether butylate, diethylene glycol monobutyl ether butylate, propylene glycol monomethyl ether butylate, dipropylene glycol monomethyl ether butylate, and 3-methoxybutyl acetate.

Among the alkylene glycol monoalkyl ether acetate, at least one selected from the group consisting of ethylene glycol monobutyl ether acetate (boiling point 179°C, surface tension 27.4 mN/m), propylene glycol monomethyl ether acetate (boiling point 146°C, surface tension 26.7 mN/m), dipropylene glycol monomethyl ether acetate (boiling point 213°C, surface tension 28.6 mN/m), and 3-methoxy butyl acetate (boiling point 171°C, surface tension 27.9 mN/m) is preferred.

One embodiment of the organic solvent represented by the general formula (5) includes alkylene glycol diacetate. Specific examples of the compound include ethylene glycol diacetate, diethylene glycol diacetate, triethylene glycol diacetate, propylene glycol diacetate, dipropylene glycol diacetate, ethylene glycol acetate propionate, ethylene glycol acetate butylate, ethylene glycol propionate butylate, ethylene glycol dipropionate, ethylene glycol acetate dibutylate, diethylene glycol acetate propionate, diethylene glycol acetate butylate, diethylene glycol propionate butylate, diethylene glycol dipropionate, diethylene glycol acetate dibutylate, propylene glycol acetate propionate, propylene glycol acetate butylate, propylene glycol propionate butylate, propylene glycol dipropionate, propylene glycol acetate dibutylate, dipropylene glycol acetate propionate, dipropylene glycol acetate butylate, dipropylene glycol propionate butylate, dipropylene glycol dipropionate, dipropylene glycol acetate dibutylate, 1,4-butanediol diacetate, and 1,3-butylene glycol diacetate.

Among the alkylene glycol diacetate, at least one selected from the group consisting of propylene glycol diacetate (boiling point 190°C, surface tension 32.6 mN/m), 1,4-butanediol diacetate (boiling point 232°C, surface tension 31.4 mN/m), and 1,3-butylene glycol diacetate (boiling point 232°C, surface tension 30.5 mN/m) is preferred.

One embodiment of the organic solvent represented by the general formula (6) includes lactates such as methyl lactate (boiling point 144°C), ethyl lactate (boiling point 154°C, surface tension 28.7 mN/m), propyl lactate (boiling point 170°C), and butyl lactate (boiling point 189°C).

One embodiment of the organic solvent represented by the general formula (7) includes alkoxyalkyl amide. Specific example of the compound include N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, and N,N-diethyl-β-octoxypropionamide.

Among them, N,N-dimethyl-β-butoxypropionamide (boiling point 216°C), and/or N,N-dibutyl-β-butoxypropionamide (boiling point 252°C) is preferred. When any of these organic solvents is used, excellent ink curability and adhesion to various base materials are easily achieved.

Specific examples of the alkanediol include ethylene glycol, diethylene glycol, triethylene glycol, propylene glycol (1,2-propanediol), 1,3-propanediol, dipropylene glycol, 1,3-butanediol, and 1,4-butanediol.

Specific examples of the cyclic ether include oxetane, tetrahydrofuran, tetrahydropyran, and their derivatives.

Among the above-listed non-hydrocarbon organic solvents, the linear organic solvents represented by the general formulae (3),(4), and (5) are preferred. That is, preferred one embodiment of the organic solvent includes at least one selected from the group consisting of alkylene glycol monoalkyl ether, alkylene glycol dialkyl ether, alkylene glycol monoalkyl ether acetate, and alkylene glycol diacetate.

In one embodiment, the linear organic solvent preferably has a viscosity of 7 mPa·s or less in the environment at 25°C, from the viewpoint of discharge stability. In addition, the surface tension of the linear organic solvent is preferably from 20 to 40 mN/m, more preferably from 22 to 35 mN/m, and even more preferably from 24 to 33 mN/m in environments at 25°C, from the viewpoints of compatibility with 2-(2-vinyloxyethoxy)ethyl acrylate. The use of the organic solvent having these viscosity and surface tension readily improves discharge stability. In addition, closeness of the surface tensions of 2-(2-vinyloxyethoxy)ethyl acrylate (32.7 mN/m) and the linear organic solvent improves wettability and spreadability on various base materials, and forms good images.

The method for measuring the viscosity and surface tension of the solvent in an environment at 25°C may use a known method. The viscosity can be measured by, for example, reading the viscosity at 50 rpm in an environment at 25°C using a TVE25L viscometer manufactured by Toki Sangyo Co., Ltd. In addition, the surface tension can be determined by measuring the surface tension in wetting a platinum plate with ink, and, for example, measuring the surface tension can be performed by using an automatic surface tensiometer CBVP-Z manufactured by Kyowa Interface Science Co., Ltd.

The linear organic solvents represented by the general formulae (3), (4), and (5) are also preferred for readily achieving excellent curability and adhesion. The reason is unknown, but the linear organic solvent has the structure of an alkylene glycol skeleton, and the structure is similar to the structure of 2-(2-vinyloxyethoxy)ethyl acrylate. The excellent characteristics are likely obtained by that the similarity in the structure between them improves the compatibility and curing rate.

Among them, particularly preferred examples of the organic solvent include (di, tri, tetra)alkylene glycol monoalkyl ethers and (di, tri, tetra)alkylene glycol dialkyl ethers represented by the general formula (3) wherein x is 2 to 4. Other examples include (di, tri, tetra)alkylene glycol monoalkyl ether acetates represented by the general formula (4) wherein x is 2 to 4. These organic solvents may be used alone, or in combination of two or more of them.

The additive amount of the organic solvent is from 0.1 to 10% by weight with reference to the total weight of the ink. When the additive amount of the organic solvent is within this range, good results are readily obtained regarding curability, discharge stability, and adhesion. From the viewpoint of curability, the additive amount of the organic solvent is preferably from 0.2 to 5% by weight with reference to the total weight of the ink. Furthermore, from the viewpoint of discharge stability, the additive amount is more preferably from 0.5 to 4% by weight.

### <Polymerizable monomer>

The ink of the present invention contains 2-(2-vinyloxyethoxy)ethyl acrylate as a polymerizable monomer. 2-(2-vinyloxyethoxy)ethyl acrylate is commercially available as, for example, "VEEA" or "VEEA-AI" manufactured by Nippon Shokubai Co., Ltd.

2-(2-vinyloxyethoxy)ethyl acrylate is a polymerizable monomer having a low viscosity and high reactivity. Therefore, it is excellent material for preparing an ink having a low viscosity and high sensitivity. The content of the 2-(2-vinyloxyethoxy)ethyl acrylate is preferably at least 5% by weight with reference to the total weight of the ink. In one embodiment, the content is preferably from 5 to 70% by weight, more preferably from 5 to 50% by weight, and even more preferably from 10 to 40% by weight. In another embodiment, the content is preferably 10% by weight or more and 70% by weight or less, and more preferably 10% by weight or more and 50% by weight or less. When the content is within this range, the viscosity of the ink composition is within a favorable range. In addition, the polymerization reactivity with other polymerizable monomer is improved, and discharge is stabilized and sufficient curability is achieved, even if the printing rate is high.

In one embodiment of the ink of the present invention, particularly the use of a glycol solvent represented by the general formula (3) or (4) is preferred for 2-(2-vinyloxyethoxy)ethyl acrylate. As described above, according to this embodiment, compatibility between the organic solvent, polymerizable monomer, and other additives is good, so that excellent discharge stability is achieved, and curability and adhesion to various base materials are improved. The glycol solvent represented by the general formula (3) or (4) is superior in terms of storage stability and odor of ink.

The ink of the present invention may further contain, in addition to 2-(2-vinyloxyethoxy)ethyl acrylate, other polymerizable monomer. The other polymerizable monomer may be selected from known monofunctional monomers and/or polyfunctional monomers.

The monofunctional monomer includes a compound having only one polymerizable functional group in the molecule. Specific examples of the compound include benzyl (meth)acrylate, 2-phenoxyethyl (meth)acrylate, (ethoxylated (or propoxylated))-2-phenoxyethyl (meth)acrylate, dicyclopentenyl(oxy ethyl)(meth)acrylate, ethoxydiethylene glycol (meth)acrylate, phenoxydiethylene glycol (meth)acrylate, 2-methoxyethyl (meth)acrylate, methoxytriethylene glycol (meth)acrylate, 2-ethoxyethyl (meth)acrylate, ethoxyethoxyethyl (meth)acrylate, methoxydipropyleneglycol (meth)acrylate, dipropyleneglycol (meth)acrylate, nonylphenol EO-modified acrylate, nonylphenol PO-modified acrylate, o-phenylphenol EO-modified acrylate, 2-ethylhexyl EO-modified acrylate, β-carboxylethyl (meth)acrylate, trimethylolpropane formal (meth)acrylate, isoamyl (meth)acrylate, cyclohexyl (meth)acrylate, tetrahydrofurfuryl (meth)acrylate, isoboronyl (meth)acrylate, norbornyl (meth)acrylate, dicyclopentanyl (meth)acrylate, isooctyl (meth)acrylate, lauryl (meth)acrylate, 2-hydroxy-3-phenoxy propyl (meth)acrylate, 1,4-cyclohexane dimethanol (meth)acrylate, 2-hydroxyethyl (meth)acrylate, 2-hydroxypropyl (meth)acrylate, 4-hydroxybutyl (meth)acrylate, acryloyl morpholine, N-vinyl caprolactam, N-vinylpyrrolidone, N-vinylformamide, and N-acryloyloxyethyl hexahydrophthalimide. These compounds may be used alone, or in combination of two or more of them.

In the present description, the terms "(meth)acryloyl", "(meth)acrylic acid", "(meth)acrylate", and "(meth)acryloyloxy" mean "acryloyl and/or methacryloyl", "acrylic acid and/or methacrylic acid", "acrylate and/or methacrylate", and "acryloyloxy and/or methacryloyloxy", respectively, unless otherwise specified.

The polyfunctional monomer includes the compounds having two or more polymerizable functional groups in the molecule. Examples include polyfunctional (meth)acrylates other than 2-(2-vinyloxyethoxy)ethyl acrylate. Specific examples of the compound include dimethylol tricyclodecane di(meth)acrylate, (ethoxylated (or propoxylated)) bisphenol A di(meth)acrylate, cyclohexane dimethanol di(meth)acrylate, (poly)ethyleneglycol di(meth)acrylate, (ethoxylated (or propoxylated))-1,6-hexanediol di(meth)acrylate, 1,9-nonane diol acrylate, 1,10-decanediol diacrylate, (ethoxylated (or propoxylated)) neopentyl glycol di(meth)acrylate, hydroxypivalic acid neopentyl glycol di(meth)acrylate, dipropylene glycol di(meth)acrylate, (neopentylglycol modified) trimethylolpropane di(meth)acrylate, tripropylene glycol di(meth)acrylate, dicyclopentanyl di(meth)acrylate, pentaerythritol tri(or tetra)(meth)acrylate, trimethylolpropane tri(or tetra)(meth)acrylate, tetramethylol methane tri(or tetra)(meth)acrylate, and dipentaerythritol hexa(meth)acrylate.

Other examples of the polyfunctional monomer include monomers having plural vinyl groups in the molecule. Specific example of the compound include butanediol divinyl ether, diethylene glycol divinyl ether, triethylene glycol divinyl ether, cyclohexane dimethanol divinyl ether, trimethylolpropane divinyl ether, pentaerythritol tri(or tetra)vinyl ether, trimethylolpropane diallyl ether, pentaerythritol tri(or tetra)allyl ether. These compounds may be used alone, or in combination of two or more of them.

Among these embodiments, the ink preferably includes, in addition to 2-(2-vinyloxyethoxy)ethyl acrylate, a polymerizable monomer having an EO (ethylene oxide -CH₂-CH₂-O-) modified or PO (propylene oxide -CH₂-CH₂-CH₂-O-, -CH(CH₃)-CH₂-O-) modified skeleton, from the viewpoint of curability. Details are not known, but the reason is likely that the oxygen atoms in the EO/PO skeleton attracts the electrons in the molecule to biase the dipole moment in the molecules, whereby they attract 2-(2-vinyloxyethoxy)ethyl acrylate and the organic solvent respectively, so that the intermolecular distance is shortened, and the polymerization reaction efficiently progresses.

From this viewpoint, in one embodiment of the ink of the present invention, the polymerizable monomer preferably contains 2-(2-vinyloxyethoxy)ethyl acrylate and a monofunctional monomer and/or polyfunctional monomer having an EO/PO modified skeleton. In this embodiment, the other polymerizable monomer used together with 2-(2-vinyloxyethoxy)ethyl acrylate preferably contains at least one compound selected from the group consisting of 2-phenoxyethyl (meth)acrylate, (ethoxylated (or propoxylated))-2-phenoxyethyl (meth)acrylate, (phenoxy diethylene glycol (meth)acrylate, methoxytriethylene glycol (meth)acrylate, methoxydipropylene glycol (meth)acrylate, dipropylene glycol (meth)acrylate, nonylphenol EO modified acrylate, nonylphenol PO modified acrylate, (ethoxylated (or propoxylated)) bisphenol A di(meth)acrylate, (ethoxylated (or propoxylated)) neopentyl glycol di(meth)acrylate, dipropylene glycol di(meth)acrylate, (neopentyl glycol modified) trimethylolpropane di(meth)acrylate, tripropylene glycol di(meth)acrylate, and trimethylolpropane tri(or tetra)(meth)acrylate. In one embodiment, the polymerizable monomer preferably includes: 2-(2-vinyloxyethoxy)ethyl acrylate; and further at least one of 2-phenoxyethyl acrylate and dipropylene glycol diacrylate.

In one embodiment, the content of the polymerizable monomer in the ink is preferably from 65 to 95% by weight, more preferably from 75 to 95% by weight, and even more preferably from 80 to 92% by weight, with reference to the total weight of the ink.

In one embodiment, when a monofunctional monomer is used, the content of the monofunctional monomer is preferably 50% by weight or less, more preferably 40% by weight or less, and even more preferably 30% by weight or less with reference to the total weight of the ink. When the content of the monofunctional monomer is within this range, suppression of ink odor and skin sensitization, and excellent curability are readily achieved.

When a polyfunctional monomer other than 2-(2-vinyloxyethoxy)ethyl acrylate is combined, the additive amount is preferably 10% by weight or more, more preferably 20% by weight or more, and even more preferably 30% by weight or more, with reference to the total weight of the ink.

In one preferred embodiment of the ink of the present invention, the polymerizable monomer includes 2-(2-vinyloxyethoxy)ethyl acrylate and other polyfunctional monomer. In more preferred embodiment, the polymerizable monomer includes 2-(2-vinyloxyethoxy)ethyl acrylate and a polyfunctional polymerizable monomer having an EO/PO skeleton. In even more preferred embodiment, the polymerizable monomer includes 2-(2-vinyloxyethoxy)ethyl acrylate and at least one selected from the group consisting of dipropylene glycol di(meth)acrylate, (neopentyl glycol modified)trimethylolpropane di(meth)acrylate, tripropylene glycol di(meth)acrylate, and EO modified bisphenol A diacrylate.

In particular, the combination of 2-(2-vinyloxyethoxy)ethyl acrylate and dipropylene glycol di(meth)acrylate is preferred from the viewpoints of the viscosity, odor, and high curability of ink. In one embodiment, when 2-(2-vinyloxyethoxy)ethyl acrylate, dipropylene glycol di(meth)acrylate, and other polymerizable monomer excluding them are used as polymerizable monomers, the content of the other polymerizable monomer is preferably from 5 to 50% by weight, preferably from 10 to 50% by weight, more preferably from 20 to 40% by weight, with reference to the total weight of the polymerizable monomer.

### <Photopolymerization initiator>

In one embodiment of the present invention, the ink contains a photopolymerization initiator, from the viewpoint of curing the ink using an active energy ray such as ultraviolet ray. The photopolymerization initiator used in the present invention may be a known photopolymerization initiator. For example, the use of a photopolymerization initiator which generates radicals by molecular cleavage or hydrogen abstraction. In the present invention, the photopolymerization initiator may be used alone, or in combination of two or more of them. In addition, a photopolymerization initiator generating radicals and another photopolymerization initiator generating cations may be combined.

Specific examples of the photopolymerization initiator include 2,2-dimethoxy-1 ,2-diphenylethane- 1-one, 1-hydroxy-cyclohexyl-phenyl-ketone, 2-hydroxy-2-methyl-1 -phenyl-propane-1 -one, 1-[4-(2-hydroxy ethoxy)-phenyl]-2-hydroxy-2-methyl-1-propane-1-one, 2-hydroxy-1-{4-[4-(2-hydroxy-2-methyl-propionyl)-benzyl]-phenyl}-2-methyl-propane -1-one, phenyl glyoxylic acid methyl ester, 2-methyl-1-[4-(methylthio)phenyl]-2-morpholinopropane-1-one, 2-benzyl-2-dimethylamino-1-(4-morpholinophenyl)-butanone-1, 2-dimethylamino-2-(4-methyl-benzyl)-1-(4-morpholino-4-yl-phenyl)-butanone-1-one, bis(2,4,6-trimethylbenzoyl)-phenylphosphine oxide, 2,4,6-trimethylbenzoyl-diphenyl-phosphine oxide, 1,2-octane dione, 1-[4-(phenylthio)-2-(O-benzoyloxime)], ethanone 1-[9-ethyl-6-(2-methylbenzoyl)-9H-carbazole-3-yl]-1-(O-acetyloxime), benzophenone, 4-phenylbenzophenone, isophthalphenone, 4-benzoyl-4'-methyl-diphenyl sulfide.

Among them, at least one selected from the group consisting of bis(2,4,6-trimethylbenzoyl)-phenylphosphine oxide, 2,4,6-trimethylbenzoyl-diphenyl-phosphine oxide, 4-phenylbenzophenone, 4-benzoyl-4'-methyl-diphenyl sulfide, and 2-benzyl-2-dimethylamino-1-(4-morpholinophenyl)-butanone-1, from the viewpoints of curability and storage stability.

In addition, a sensitizer for the photopolymerization initiator may be used. Examples of the sensitizer include amines and thioxanthone compounds which will not cause addition reaction with polymerizable monomers. Examples of the compound include amines such as trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, ethyl-4-dimethylamino benzoate, and 4,4'-bis(diethylamino)benzophenone, and thioxanthone compounds such as thioxanthone, 2,4-diethylthioxanthone, and 2-isopropylthioxanthone. Among them, ethyl-4-dimethylamino benzoate, 4,4'-bis(diethyl amino)benzophenone, and 2-isopropylthioxanthone are particularly preferred. The photopolymerization initiator and sensitizer are preferably selected from those having excellent solubility and not inhibiting ultraviolet transmission in the ink composition and used.

The content of the photopolymerization initiator and sensitizer is preferably from 2 to 30% by weight, more preferably from 2 to 20% by weight, and even more preferably from 5 to 15% by weight, with reference to the total weight of the polymerizable monomer. When the content of the photopolymerization initiator is 2% by weight or more, good curability is readily achieved. On the other hand, when the content is 20% by weight or less, the curing rate is efficiently increased, so that good inkjet discharge properties are readily achieved even at low temperatures, without occurrence of insoluble components of the photopolymerization initiator.

### <Other components>

The inkjet ink of the present invention may contain, in addition to the polymerizable monomer and photopolymerization initiator, a surface conditioner, a pigment dispersant, and various additives. Specific examples of the additive include a polymerization inhibitor, an anti-foaming agent, and an antioxidant.

### <Surface conditioner>

The surface conditioner herein means an additive decreasing the surface tension of the ink. In one embodiment of the present invention, the surface conditioner means a substance which decreases the static surface tension of an ink containing no surface conditioner by 3 mN/m or more when the surface conditioner is added in an amount of 1.0% by weight.

The static surface tension can be measured by examining the static surface tension in wetting a platinum plate with the ink in an environment at 25°C, performed by using an automatic surface tensiometer CBVP-Z manufactured by Kyowa Interface Science Co., Ltd..

Examples of the surface conditioner include silicon surface conditioners, fluorine surface conditioners, acrylic surface conditioners, and acetylene glycol surface conditioners.

From the viewpoints of the ability of surface tension decrease, and compatibility with the polymerizable monomer, the use of a silicon surface conditioner is preferred.

Specific examples of the silicon surface conditioner include those having a modified dimethylsiloxane skeleton. Among them, polyether modified siloxane surface conditioners are preferred. The polyether may be, for example, polyethylene oxide or polypropylene oxide. In one embodiment of the present invention, commercially available polyether modified silicon surfactants may be used. Examples of preferred typical products include polyether-modified siloxanes such as BYK (registered trademark)-378, 348, and 349 manufactured by BYK Japan KK; and polyether modified polydimethylsiloxanes such as BYK-UV 3500 and UV 3510. Other examples include polyether modified siloxane copolymers such as TEGO (registered trademark) GLIDE 450, 440, 435, 432, 410, 406, 130, 110, and 100 manufactured by Evonik Japan Co., Ltd.

Among them, from the viewpoints of good image quality formation, polyether modified silicon surface conditioners such as BYK-331, 378, 348, UV 3510, TEGO GLIDE 450, 440, 432, and 410 are preferred.

The content of the silicon surface conditioner is preferably 0.1% by weight or more and less than 5.0% by weight with reference to the total weight of the ink. When the content is 0.1% by weight or more, wettability of the ink for the base material is readily improved. On the other hand, when the content is less than 5.0% by weight, storage stability of the ink is readily secured.

In one embodiment of the ink of the present invention, the ink may be a clear ink composed of the above-described components. In another embodiment, the ink may be a color ink composed of the above-described components further containing a coloring agent. The embodiment of the color ink is described below.

### <Pigment>

The coloring agent used in the color ink is a pigment. The pigment comprises one or more pigments selected from the group consisting of carbon black, and an organic pigment.

In one embodiment of the present invention, from the viewpoint of discharge stability of the ink, it is preferred to use a pigment having an average particle size of 500 nm or less, preferably 400 nm or less, more preferably 300 nm or less.

The average particle size is D50, and can be measured by, for example, diluting an ink with ethyl acetate 200 to 1000 times, and using Microtrac UPA 150 (manufactured by Nikkiso Co., Ltd.).

Examples of the organic pigment used in the present invention are listed below. The use of these pigments is preferred for obtaining a color ink having good light resistance.

Magenta pigments: C.I. Pigment Violet 19, C.I. Pigment Red 122, 176, 185, 202, 266, and 269.

Yellow pigments: C.I. Pigment Yellow 120, 139, 150, 151, 155, 180, and 185.

Cyan pigments: C.I. Pigment Blue 15:3, 15:4.

Green pigments: C.I. Pigment Green 7, 36.

Orange pigments: C.I. Pigment Orange 43, 64.

Violet pigments: C.I. Pigment Violet 23.

Black pigments: C.I. Pigment Black 7.

The present invention will not be limited to the above-described pigments, and the ink may include other organic pigment. More specifically, a special color ink having a color tone other than the above-described ones, or a control color ink using two or more pigments may be composed using pigments other than the above-described orange, green, and violet pigments. As one embodiment of the present invention, an ink set may be made by appropriately combining various color inks, control color inks, a white ink, and clear inks containing no pigment.

In the embodiment of the color ink, the pigment content is preferably from 0.1 to 20% by weight, and more preferably from 2 to 10% by weight, with reference to the total weight of the ink. When the pigment content is within this range, good results are readily obtained regarding the color density and light resistance of the printed materials.

In a white ink, the pigment content is preferably from 3 to 50% by weight, more preferably from 5 to 40% by weight, and even more preferably from 7 to 20% by weight, with reference to the total weight of the white ink. When the pigment content is within this range, good results are readily obtained regarding storage stability and hiding power of the ink.

### <Pigment dispersant>

When a pigment-containing ink is made as one embodiment of the present invention, in order to improve dispersibility of the pigment and storage stability of the ink, the use of a pigment dispersant is preferred. The pigment dispersant may be selected from known compounds. Among them, a resin type dispersant having a basic functional group, specifically, a resin type dispersant having a urethane skeleton is preferred. The resin type dispersant having a urethane skeleton is preferred for readily obtaining a pigment dispersion having marked high frequency properties and good storage stability. Specific examples of the resin type pigment dispersant (hereinafter referred to as "pigment-dispersing resin") include SOLSPERSE 32000, 76400, 76500, J100, and J180; and Disperbyk-161, 162, 163, 164, 165, 166, 167, and 168 manufactured by The Lubrizol Corporation.

The additive amount of the pigment-dispersing resin is arbitrarily selected for securing desired stability. In one embodiment, excellent flow characteristics of the ink is achieved when the pigment-dispersing resin is from 25 to 150 parts by weight with reference to 100 parts by weight of the organic pigment. The pigment-dispersing resin is preferably used within this range, because the ink has good dispersion stability, and tends to have quality equivalent to that in the initial stage, even after the lapse of a long term. Furthermore, the pigment-dispersing resin is preferably from 40 to 100 parts by weight with reference to 100 parts by weight of the organic pigment, from the viewpoints of both ink dispersibility and discharge properties.

The additive amount of the pigment-dispersing resin may be arbitrarily selected according to the type of the pigment used. In one embodiment, when carbon black is used as a pigment, the pigment-dispersing resin is preferably from 25 to 150 parts by weight, and more preferably from 40 to 100 parts by weight, with reference to 100 parts by weight of carbon black.

### <Polymerization inhibitor>

In order to improve viscosity stability during aging of the ink, discharge stability after aging, and viscosity stability in the inkjet recording apparatus, a polymerization inhibitor may be used. Examples of the polymerization inhibitor include hindered phenol compounds, phenothiazine compounds, hindered amine compounds, and phosphorus compounds are particularly preferred. Specific examples include aluminum salts of 4-methoxyphenol, hydroquinone, methylhydroquinone, t-butyl hydroquinone, 2,6-di-t-butyl-4-methylphenol, phenothiazine, and N-nitrosophenylhydroxylamine. The additive amount is preferably from 0.01 to 2% by weight with reference to the whole ink, thereby improving temporal stability while maintaining curability.

Examples of typical method for curing the ink include pin-cure type, and pin-cureless type. The pin-cure type generally applies active energy rays between heads, and fixes the ink discharged on a printing base material every time of discharge. On the other hand, the pin-cureless type cures the inks discharged from multiple heads simultaneously, without fixing the inks every time of discharge. The pin-cure type requires, for example, at least four lamps for four color printing. Accordingly, the cost and size of the apparatus increase, which often limit the applications, and hinders its prevalence. However, according to the present invention, the ink has excellent curability, and is suitable to printers of pin-cureless type. According to the present invention, printed materials having high quality images are readily obtained by, in particular, pin-cureless type printers.

The active energy ray for curing the ink is selected from energy rays which influence the electron orbits of the body to be irradiated, and induce the polymerization reaction of radicals, cations, and anions. Specific examples include, but not limited to, electron rays, ultraviolet rays, and infrared rays. In the present invention, ultraviolet rays are preferred.

Specific examples useful as the light source of ultraviolet rays include high-pressure mercury lamps, metal halide lamps, low-pressure mercury lamps, ultrahigh pressure mercury lamps, ultraviolet lasers, LEDs, and solar light. From the viewpoints of convenience and price, the use of a high-pressure mercury lamp, a metal halide lamp, and an LED having a maximum emission wavelength of 300 nm to 400 nm is preferred.

### <Printing base material>

The printing base material to which the ink of the present invention is applicable is not particularly limited, and may be any base material. Examples include plastic base materials made of polycarbonate, hard vinyl chloride, soft vinyl chloride, polystyrene, styrofoam, PMMA, polypropylene, polyethylene, or PET, mixtures or modifications of these materials, paper base materials such as fine paper, art coated paper, semi-gloss coated paper, and cast coated paper, glass base materials, and metal base materials such as stainless steel and aluminum vapor deposition paper. These printing base materials may have a smooth or uneven surface. The various base materials may be transparent, translucent, or opaque. In addition, the printing base material may be a laminate composed of two or more of the various base materials bonded together. Furthermore, the printing base material may have a functional layer such as a release-adhesive layer on the opposite side of the printing surface. In alternative embodiment of the printing base material, a functional layer such as an adhesive layer may be formed on the printed surface after printing.

According to the present invention, spreadability and adhesion of the ink for various base materials are improved by the use of an organic solvent and a polymerizable monomer containing 2-(2-vinyloxyethoxy)ethyl acrylate, in an amount of 0.1 to 10% by weight with reference to the total weight of the ink. In addition, the ink also has excellent curability and discharge stability, so that high quality images are efficiently and readily formed on various printing base materials.

### EXAMPLES

The present invention is further described below in detail. The "part" in Examples represents "parts by weight".

### 1. Preparation of ink

### (Examples 1 to 31, 37, and Comparative Examples 1 to 7)

### Preparation of clear ink

The raw materials used for the preparation of the clear ink are listed in Table 2. According to the recipe shown in Tables 3 to 6, a polymerizable monomer and a photopolymerization initiator, a polymerization inhibitor, and an organic solvent are slowly added to a reaction vessel, and the mixed solution thus obtained was stirred. Subsequently, after adding a surface tension regulator to the mixed solution, the mixture was shaken for 6 hours using a shaker, thereby preparing an ink. The ink thus obtained was filtered through a PTFE filter having a pore diameter of 0.5 µm (micron) to remove dust and coarse particles, and used as an evaluation ink. The addition and mixing of the raw materials for obtaining the mixed solution may be in no particular order.

### (Examples 32 to 35)

### Preparation of color ink

15 parts by weight of an organic pigment, 7.5 parts of a pigment dispersant, and 77.5 parts by weight of DPGDA were stirred using a high-speed mixer until uniform. Subsequently, the mill base thus obtained was dispersed using a horizontal sand mill for about 1 hour, thereby preparing a pigment dispersion.

According to the recipe shown in Table 7, to the pigment dispersion prepared above, a mixed solution of a polymerizable monomer and a photopolymerization initiator, a polymerization inhibitor, and an organic solvent was added slowly, and the mixed solution thus obtained was stirred. The additive amount of DPGDA shown in Table 7 includes the amount of DPGDA in the pigment dispersion. Subsequently, a surface tension regulator was added to the mixed solution, and then shaken for 6 hours using a shaker, thereby preparing a color ink. The color ink thus obtained was filtered through a PTFE filter having a pore diameter of 0.5 micron to remove dust and coarse particles, and used as an evaluation ink. The addition and mixing of the raw materials for obtaining the mixed solution may be in no particular order.

### (Example 36)

### Preparation of white ink

This example is not in accordance with the invention.

50 parts of TIPAQUE CR-60 (aluminum-treated titanium oxide, primary particle size 210 nm, manufactured by Ishihara Sangyo Kaisha, Ltd.) as a pigment, 2.5 parts of a pigment dispersant, and 47.5 parts of DPGDA were stirred using a high-speed mixer or the like until uniform. Subsequently, the mill base thus obtained was dispersed using a horizontal sand mill for about 2 hours, thereby preparing a pigment dispersion.

According to the recipe shown in Table 7, to the pigment dispersion prepared above, a mixed solution of a polymerizable monomer and a photopolymerization initiator, a polymerization inhibitor, and an organic solvent was added slowly, and the mixed solution thus obtained was stirred. The additive amount of DPGDA shown in Table 7 includes the amount of DPGDA in the pigment dispersion. Subsequently, a surface tension regulator was added to the mixed solution, and then shaken for 6 hours using a shaker, thereby preparing a white ink. The white ink thus obtained was filtered through a membrane filter having a pore diameter of 1 µm (micron) to remove dust and coarse particles, and used as an evaluation ink. The addition and mixing of the raw materials for obtaining the mixed solution may be in no particular order.

Details about the pigments and pigment-dispersing resin used in Examples 32 to 36 are as follows.

Black pigment: carbon black ("Special Black 350" manufactured by Evonik Japan Co., Ltd.)
Cyan pigment: Pigment Blue 15:3 ("Lionol Blue 7351" manufactured by Toyo Color Co., Ltd.)
White pigment: titanium oxide ("TIPAQUE CR-60 (aluminum-treated titanium oxide, primary particle size 210 nm,)" manufactured by Ishihara Sangyo Kaisha, Ltd.)
Pigment dispersant: basic pigment-dispersing resin "SOLSPERSE 32000 (acid value 24.8 mmgKOH/g, amine value 27.1 mmgKOH/g)" manufactured by The Lubrizol Corporation

### (Reference Example 1)

### Preparation of inkjet ink containing metal powder

An aluminum dispersion ("MetasheenR 41-0310" manufactured by BASF, aluminum content: 10.0% by mass, solvent: propylene glycol monomethyl ether acetate, boiling point 146°C) was irradiated with ultrasonic for 30 minutes. Thereafter, the solvent was evaporated using an evaporator, so as to make the aluminum content in the dispersion 20.0% by mass.

According to the recipe shown in Table 7, to 10 parts by weight of the aluminum dispersion prepared above, a polymerizable monomer, a photopolymerization initiator, a polymerization inhibitor, and a surface tension regulator were slowly added in this order under stirring, and were mixed to prepare an ink. The ink thus obtained was filtered through an SUS mesh filter having a pore diameter of 5 µm to remove coarse particles, and used as an evaluation ink.

### 2. Ink evaluation method

Using the evaluation inks prepared in Examples and Comparative Examples, various properties were evaluated as follows.

### (Curability)

A sample was made by applying an evaluation ink using a bar coater to a base material PET50 K2411 manufactured by Lintec Corporation at a film thickness of 12 µm. The coating film of the sample was cured in one pass under irradiation with a UV lamp (240 W) manufactured by Nordson K.K., at three conveyor rates of 50 m/minute, 25 m/minute, and 10 m/minute. Subsequently, each of the cured coating film was rubbed with a swab 10 round trips, and then the surface of the coating film was observed by visual observation, and curability was evaluated according to the following criteria.

### Evaluation criteria

A: the coating film cured at 50 m/minute has no scratch.
B: the coating film cured at 50 m/minute has scratches, but the coating film cured at 25 m/minute has no scratch.
C: the coating film cured at 25 m/minute has scratches, but the coating film cured at 10 m/minute has no scratch.
D: the coating film cured at 10 m/minute has scratches.

### (Discharge stability)

Discharge stability was evaluated from the viewpoints of satellite, mist, and degap properties using Dot view (ink droplet observation apparatus) manufactured by Tritek Co., Ltd, and OnePass JET. An evaluation ink was injected using a syringe into a head manufactured by Kyocera Corporation, and printed at a head temperature of 40°C.

The satellite and mist were evaluated using Dot view, and the decap properties were evaluated using OnePass JET. The evaluation of the decap properties is as follows. An evaluation ink was charged into the head, the absence of nozzle voids in the initial stage was confirmed by printing, and then the apparatus was allowed to stand for 10 minutes with the head warmed at 40°C, and printing was carried out again. At this time, the occurrence of nozzle voids was determined as "decapped". The evaluation criteria for discharge stability are as follows.

### Evaluation criteria

A: No problem with satellite, mist, and decap properties.
B: Satellite partially occurs, but there is no decap, and the printing quality has no problem.
C: Satellite is conspicuous, but there is no decap.
D: Droplets are heavily separated, but there is no decap.
E: Decapped.

### (Adhesion)

Samples were made by applying an evaluation ink using a bar coater to various base materials at a film thickness of 6 µm. Subsequently, the coating film of the sample was cured using a UV lamp (240 W) manufactured by Nordson K.K. Two points on the cured coating film were removed by cellophane tape, and the adhesion was evaluated according to the following criteria. The base materials were PET, PP, PVC, glass, and coated paper.

### Evaluation criteria

A: no separation occurs both times.
B: about 50% separation occurs once in twice.
C: about 50% separation occurs both times.
D: complete separation occurs both times.

Table 2 shows the raw materials of the inks other than the pigments and pigment dispersants used in each example and each comparative example. Tables 3 to 7 show the ink compositions and evaluation results in Examples and Comparative Examples.

**Table 2**

| | | Compound name | Structure | Boiling point (°C) |
|---|---|---|---|---|
| Solvent | A | 3-methyl-2-oxazolidinone (MOZ) | General formula (1) | 266 |
| | B | 2-pyrrolidone | General formula (2) | 245 |
| | C | γ-butyrolactone (GBL) | General formula (2) | 204 |
| | D | Diethylene glycol monobutyl ether (BDG) | General formula (3) | 230 |
| | E | Diethylene glycol diethyl ether (DEDG) | General formula (3) | 189 |
| | F | Ethylene glycol monobutyl ether acetate (BGAc) | General formula (4) | 179 |
| | G | Propylene glycol diacetate (PGDA) | General formula (5) | 190 |
| | H | N-propyl lactate | General formula (6) | 170 |
| | I | N,N-dimethyl-β-butoxypropionamide ("EQUAMIDE M100" manufactured by Idemitsu Kosan Co., Ltd.) | General formula (7) | 216 |
| | J | 1,3-propanediol (1,3-PD) | Alkanediol | 214 |
| | K | Isoparaffin solvent ("ISOPAR L" manufactured by Exxon Mobil Corporation) | Other | 183 |
| | L | Ethylene glycol monomethyl ether (MEG) | General formula (3) | 124 |
| | M | Propylene glycol monomethyl ether acetate | General formula (4) | 146 |
| Polymerizable monomer | VEEA | 2-(2-vinyloxyethoxy)ethyl acrylate ("VEEA-Al" manufactured by Nippon Shokubai Co., Ltd.) | | |
| | DPGDA | Dipropylene glycol diacrylate ("Laromer DPGDA" manufactured by BASF) | | |
| | M111 | Nonylphenol EO-modified acrylate ("ARONIX M111" manufactured by Toagosei Co., Ltd.) | | |
| | HDDA | 1,6-hexanediol diacrylate ("BISCOAT 230" manufactured by Osaka Organic Chemical Industry Ltd.) | | |
| | HPPA | Hydroxypivalic acid neopentyl glycol diacrylate ("Miramer M210" manufactured by Miwon Specialty Chemical Co., Ltd.) | | |
| | DPHA | Dipentaerythritol hexaacrylate ("Miramer M600" manufactured by Miwon Specialty Chemical Co., Ltd.) | | |
| Photopolymerization initiator | TPO | 2,4,6-trimethylbenzoyl diphenylphosphine oxide ("Darocure TPO" manufactured by BASF) | | |
| | Irgacure379 | "Irgacure 379" manufactured by BASF | | |
| Polymerization inhibitor | H-BHT | 2,5-t-butyl-4-methylphenol ("H-BHT" manufactured by Honshu Chemical Industry Co., Ltd.) | | |
| Surface conditioner | BYK-331 | Polyether-modified dimethylsiloxane ("BYK-331" manufactured by BYK Japan KK) | | |

**Table 3**

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Polymerizable monomer | VEEA | 30.0 | 30.0 | 30.0 | 30.0 | 30.0 | 30.0 | 30.0 | 30.0 | 30.0 | 30.0 | 30.0 | 30.0 | 30.0 |
| | DPGDA | 61.5 | 61.5 | 56.7 | 60.7 | 54.7 | 61.2 | 52.2 | 59.7 | 53.7 | 55.7 | 58.7 | 56.7 | 58.7 |
| Photopolymerization initiator | TPO | 6.0 | 6.0 | 6.0 | 6.0 | 6.0 | 6.0 | 6.0 | 6.0 | 6.0 | 6.0 | 6.0 | 6.0 | 6.0 |
| | Irgacur 379 | 2.0 | 2.0 | 2.0 | 2.0 | 2.0 | 2.0 | 2.0 | 2.0 | 2.0 | 2.0 | 2.0 | 2.0 | 2.0 |
| Polymerization inhibitor | H-BHT | 0.1 | 0.1 | 0.1 | 0.1 | 0.1 | 0.1 | 0.1 | 0.1 | 0.1 | 0.1 | 0.1 | 0.1 | 0.1 |
| Surface conditioner | BYK-331 | 0.2 | 0.2 | 0.2 | 0.2 | 0.2 | 0.2 | 0.2 | 0.2 | 0.2 | 0.2 | 0.2 | 0.2 | 0.2 |
| Solvent | A | 0.2 | | | | | | | | | | | | |
| | B | | 0.2 | 5.0 | | | | | | | | | | |
| | C | | | | 1.0 | 7.0 | | | | | | | | |
| | D | | | | | | 0.5 | 9.5 | | | | | | |
| | E | | | | | | | | 2.0 | 8.0 | | | | |
| | F | | | | | | | | | | 6.0 | | | |
| | G | | | | | | | | | | | 3.0 | | |
| | H | | | | | | | | | | | | 5.0 | |
| | I | | | | | | | | | | | | | 3.0 |
| | J | | | | | | | | | | | | | |
| | K | | | | | | | | | | | | | |
| | L | | | | | | | | | | | | | |
| Total | | 100.0 | 100.0 | 100.0 | 100.0 | 100.0 | 100.0 | 100.0 | 100.0 | 100.0 | 100.0 | 100.0 | 100.0 | 100.0 |
| Curability | | A | A | A | A | B | A | B | A | B | B | A | A | A |
| Discharge stability | | B | B | B | B | B | A | A | A | A | A | B | B | B |
| Adhesion | PET | A | A | A | A | A | A | A | A | A | A | A | B | B |
| | PP | B | B | B | B | B | A | A | A | A | A | A | B | B |
| | PVC | B | B | A | B | A | A | A | A | A | A | A | B | B |
| | glass | B | B | B | B | B | B | A | B | A | A | A | B | B |
| | coated paper | B | B | B | B | B | B | B | B | B | B | B | B | B |

**Table 4**

| | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|
| Polymerizable monomer | VEEA | 30.0 | 30.0 | 30.0 | 30.0 | 30.0 | 30.0 | 10.0 | 40.0 | 50.0 | 10.0 | 40.0 | 50.0 |
| | DPGDA | 59.7 | 56.7 | 55.7 | 59.7 | 57.7 | 53.7 | 78.7 | 48.7 | 38.7 | 78.7 | 48.7 | 38.7 |
| Photopolymerization initiator | TPO | 6.0 | 6.0 | 6.0 | 6.0 | 6.0 | 6.0 | 6.0 | 6.0 | 6.0 | 6.0 | 6.0 | 6.0 |
| | Irgacure 379 | 2.0 | 2.0 | 2.0 | 2.0 | 2.0 | 2.0 | 2.0 | 2.0 | 2.0 | 2.0 | 2.0 | 2.0 |
| Polymerization inhibitor | H-BHT | 0.1 | 0.1 | 0.1 | 0.1 | 0.1 | 0.1 | 0.1 | 0.1 | 0.1 | 0.1 | 0.1 | 0.1 |
| Surface conditioner | BYK-331 | 0.2 | 0.2 | 0.2 | 0.2 | 0.2 | 0.2 | 0.2 | 0.2 | 0.2 | 0.2 | 0.2 | 0.2 |
| Organic solvent | A | | | | | | | | | | | | |
| | B | | 1.0 | 1.0 | | | | | | | | | |
| | C | | | | 1.0 | 1.0 | | | | | | | |
| | D | | 4.0 | | 1.0 | | 4.0 | 3.0 | 3.0 | 3.0 | | | |
| | E | | | 5.0 | | | 4.0 | | | | 3.0 | 3.0 | 3.0 |
| | F | | | | | 3.0 | | | | | | | |
| | G | | | | | | | | | | | | |
| | H | | | | | | | | | | | | |
| | I | | | | | | | | | | | | |
| | J | 2.0 | | | | | | | | | | | |
| | K | | | | | | | | | | | | |
| | L | | | | | | | | | | | | |
| Total | | 100.0 | 100.0 | 100.0 | 100.0 | 100.0 | 100.0 | 100.0 | 100.0 | 100.0 | 100.0 | 100.0 | 100.0 |
| Curability | | A | A | B | A | A | B | B | A | A | B | A | A |
| Discharge stability | | B | A | A | A | A | A | A | A | A | A | A | A |
| Adhesion | PET | B | B | B | B | A | A | B | A | A | B | A | A |
| | PP | B | B | B | B | B | A | B | B | B | B | B | B |
| | PVC | B | B | B | B | A | A | B | A | A | B | A | A |
| | glass | B | B | B | B | B | A | B | B | B | B | B | B |
| | coated paper | B | B | B | B | B | B | B | B | B | B | B | B |

**Table 5**

| | | Example 26 | Example 27 | Example 28 | Example 29 | Example 30 | Example 31 |
|---|---|---|---|---|---|---|---|
| Polymerizable monomer | VEEA | 30.0 | 70.0 | 50.0 | 50.0 | 35.0 | 50.0 |
| | DPGDA | 61.6 | | | | | 33.7 |
| | M111 | | 18.7 | | | 53.7 | |
| | HDDA | | | 38.7 | | | |
| | HPPA | | | | 38.7 | | |
| | DPHA | | | | | | 5.0 |
| Photopolymerization initiator | TPO | 6.0 | 6.0 | 6.0 | 6.0 | 6.0 | 6.0 |
| | Irgacure 379 | 2.0 | 2.0 | 2.0 | 2.0 | 2.0 | 2.0 |
| Polymerization inhibitor | H-BHT | 0.1 | 0.1 | 0.1 | 0.1 | 0.1 | 0.1 |
| Surface conditioner | BYK-331 | 0.2 | 0.2 | 0.2 | 0.2 | 0.2 | 0.2 |
| Organic solvent | A | | | | | | |
| | B | | | | | | |
| | C | | | | | | |
| | D | | | | | | |
| | E | | 3.0 | | | 3.0 | 3.0 |
| | F | | | | | | |
| | G | | | 3.0 | 3.0 | | |
| | H | 0.1 | | | | | |
| | I | | | | | | |
| | J | | | | | | |
| | K | | | | | | |
| | L | | | | | | |
| Total | | 100.0 | 100.0 | 100.0 | 100.0 | 100.0 | 100.0 |
| Curability | | B | A | B | B | B | A |
| Discharge stability | | B | B | B | B | B | A |
| Adhesion | PET | B | B | B | B | B | A |
| | PP | B | B | B | B | B | B |
| | PVC | B | B | B | B | B | A |
| | glass | B | B | B | B | B | B |
| | coated paper | B | B | B | B | B | B |

**Table 6**

| | | Comparative example 1 | Comparative example 2 | Comparative example 3 | Comparative example 4 | Comparative example 5 | Comparative example 6 | Comparative example 7 |
|---|---|---|---|---|---|---|---|---|
| Polymerizable monomer | VEEA | 30.0 | 30.0 | 30.0 | 30.0 | 30.0 | 30.0 | |
| | DPGDA | 61.7 | 61.7 | 49.7 | 41.7 | 56.7 | 56.7 | 84.7 |
| Photopolymerization initiator | TPO | 6.0 | 6.0 | 6.0 | 6.0 | 6.0 | 6.0 | 6.0 |
| | Irgacure 379 | 2.0 | 2.0 | 2.0 | 2.0 | 2.0 | 2.0 | 2.0 |
| Polymerization inhibitor | H-BHT | 0.1 | 0.1 | 0.1 | 0.1 | 0.1 | 0.1 | 0.1 |
| Surface conditioner | BYK-331 | 0.2 | 0.2 | 0.2 | 0.2 | 0.2 | 0.2 | 0.2 |
| Organic solvent | A | | | | | | | |
| | B | | | 12.0 | | | | |
| | C | | | | 20.0 | | | |
| | D | | | | | | | 7.0 |
| | E | | | | | | | |
| | F | | | | | | | |
| | G | | | | | | | |
| | H | | 0.04 | | | | | |
| | I | | | | | | | |
| | J | | | | | | | |
| | K | | | | | 5.0 | | |
| | L | | | | | | 5.0 | |
| Total | | 100.0 | 100.0 | 100.0 | 100.0 | 100.0 | 100.0 | 100.0 |
| Curability | | B | B | D | D | D | B | C |
| Discharge stability | | B | B | C | D | D | E | D |
| Adhesion | PET | C | C | B | B | C | C | C |
| | PP | D | C | C | C | D | C | C |
| | PVC | C | C | C | C | C | C | C |
| | glass | D | C | B | B | D | C | C |
| | coated paper | D | C | B | B | D | D | D |

**Table 7**

| | | Example 32 | Example 33 | Example 34 | Example 35 | Example36 | Example 37 | Reference example 1 |
|---|---|---|---|---|---|---|---|---|
| Pigment | Type | Black | Black | Cyan | Cyan | White | | Metal powder |
| | Additive amount | 3.0 | 3.0 | 3.0 | 3.0 | 18.0 | | 2.0 |
| Pigment dispersant SP32000 | | 1.5 | 1.5 | 1.5 | 1.5 | 0.9 | | |
| Polymerizable monomer | VEEA | 30.0 | 30.0 | 30.0 | 30.0 | 30.0 | 30.0 | 30.0 |
| | DPGDA | 56.7 | 47.7 | 49.2 | 49.2 | 40.8 | 53.7 | 51.7 |
| Photopolymerization initiator | TPO | 6.0 | 6.0 | 6.0 | 6.0 | 6.0 | 6.0 | 6.0 |
| | Irgacure 379 | 2.0 | 2.0 | 2.0 | 2.0 | 2.0 | 2.0 | 2.0 |
| Polymerization inhibitor | H-BHT | 0.1 | 0.1 | 0.1 | 0.1 | 0.1 | 0.1 | 0.1 |
| Surface conditioner | BYK-331 | 0.2 | 0.2 | 0.2 | 0.2 | 0.2 | 0.2 | 0.2 |
| Organic solvent | A | | | | | | | |
| | B | | | | | | | |
| | C | | | | | | | |
| | D | 0.5 | 9.5 | | | | | |
| | E | | | 8.0 | | 2.0 | | |
| | F | | | | | | | |
| | G | | | | | | | |
| | H | | | | | | | |
| | I | | | | | | | |
| | J | | | | | | | |
| | K | | | | | | | |
| | L | | | | | | | |
| | M | | | | 8.0 | | 8.0 | 8.0 |
| Total | | 100.0 | 100.0 | 100.0 | 100.0 | 100.0 | 100.0 | 100.0 |
| Curability | | B | B | B | B | B | B | C |
| Discharge stability | | A | A | A | A | B | A | D |
| | PET | A | A | A | A | A | A | C |
| | PP | A | A | A | A | A | A | D |
| | PVC | A | A | A | A | A | A | C |
| | glass | B | A | A | A | B | A | D |
| | coated paper | B | B | B | B | B | B | D |

As shown in Tables 3 to 5 and Table 7, according to the embodiments of the present invention, an ink having excellent curability and discharge stability, and excellent adhesion to various base materials can be provided. In particular, the comparison between Examples 3, 12, and 15 (Tables 3 and 4), and Comparative Examples 5 and 6 (Table 6) indicates that the combination of VEEA and the non-hydrocarbon organic solvent having a boiling point of 140 to 300°C improves curability.

In addition, for example, the comparison between Example 25 (Table 4) and Example 29 (Table 5) indicates that, among the combinations of VEEA and polyfunctional monomers, the combination of VEEA and a polyfunctional monomer having an EO-modified skeleton tends to achieve better results in various properties. Furthermore, the comparison between Example 27 and Example 30 (Table 5) indicates that curability is readily improved by reducing the monofunctional monomer in the combination of VEEA and the monofunctional monomer.

Furthermore, Reference Example 1 (Table 7) indicates that the ink containing metal powder such as aluminum has low curability, discharge stability, and adhesion, even if it contains VEEA and an organic solvent having a boiling point of 140 to 300°C.

## Claims

1. An active energy ray-curable inkjet ink comprising an organic solvent having a boiling point of 140°C to 300°C, a polymerizable monomer containing 2-(2-vinyloxyethoxy)ethyl acrylate, and a pigment,
wherein a content of the organic solvent is from 0.1 to 10% by weight with reference to the total weight of the ink, and
wherein the organic solvent comprises at least one selected from the group consisting of the organic solvent represented by any of the following general formulae (1) to (7), alkanediols, and cyclic ethers, 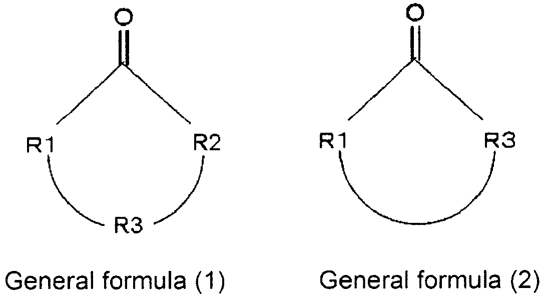
R₇-(OX¹)ₓ-O-R₈ General formula (3)
R₉-(OX¹)ₓ-COOCH₃ General formula (4)
CH₃CO(OX¹)ₓOCOCH₃ General formula (5)
CₓH₂ₓ₊₁-O-COCH(CH₃)OH General formula (6)
R₁₀-O-C₂H₄-CON(R₁₁)₂ General formula (7)
wherein R₁ and R₂ are each independently -NR₆- or an oxygen atom,
R₃ is a hydrocarbon group represented by CₘHₙ, m represents an integer of 2 to 8, n represents an integer of 2m-4, 2m-2, or 2m, the hydrocarbon group may have a branched structure, and
R₆ represents an alkyl group having 1 to 3 carbon atoms, a hydroxyalkyl group, a hydroxyl group, or a hydrogen atom;
R₇, R₉, R₁₀, and R₁₁ represent a hydrocarbon group composed of single bonds only and having 1 to 5 carbon atoms, and may have a branched structure;
R₈ represents a hydrogen atom or a hydrocarbon group composed of single bonds only and having 1 to 5 carbon atoms, and may have a branched structure;
X¹ represents a hydrocarbon group composed of single bonds only and having 2 to 4 carbon atoms, and may have a branched structure;
x represents an integer of 1 to 4,
wherein the pigment comprises one or more pigments selected from the group consisting of carbon black, and an organic pigment.

2. The active energy ray-curable inkjet ink of claim 1, wherein the polymerizable monomer further comprises a polymerizable monomer having an ethylene oxide-modified or propylene oxide-modified skeleton other than the 2-(2-vinyloxyethoxy)ethyl acrylate.

3. The active energy ray-curable inkjet ink of claim 1 or 2, wherein the polymerizable monomer contains a monofunctional monomer in an amount of 50% by weight or less with reference to the total weight of the ink.

4. The active energy ray-curable inkjet ink of any one of claims 1 to 3, wherein the content of the organic solvent is from 0.2 to 4 % by weight with reference to the total weight of the ink.

5. The active energy ray-curable inkjet ink of claim 2, wherein the polymerizable monomer having an ethylene oxide-modified or propylene oxide-modified skeleton other than the 2-(2-vinyloxyethoxy)ethyl acrylate is a polyfunctional monomer, and the amount of the polyfunctional monomer other than the 2-(2-vinyloxyethoxy)ethyl acrylate is 20 % by weight or more with reference to the total weight of the ink.

6. The active energy ray-curable inkjet ink of claim 1 or 2, wherein the polymerizable monomer further comprises dipropylene glycol di(meth)acrylate.

7. The active energy ray-curable inkjet ink of any one of claims 1 to 6, wherein the organic solvent comprises at least one selected from the group consisting of the organic solvents represented by any one of the general formulae (3), (4) and (5).

8. An active energy ray-curable inkjet clear ink comprising an organic solvent having a boiling point of 140°C to 300°C, and a polymerizable monomer containing 2-(2-vinyloxyethoxy)ethyl acrylate,
wherein a content of the organic solvent is from 0.1 to 10% by weight with reference to the total weight of the ink, and
wherein the organic solvent comprises at least one selected from the group consisting of the organic solvent represented by any of the following general formulae (1) to (7), alkanediols, and cyclic ethers, 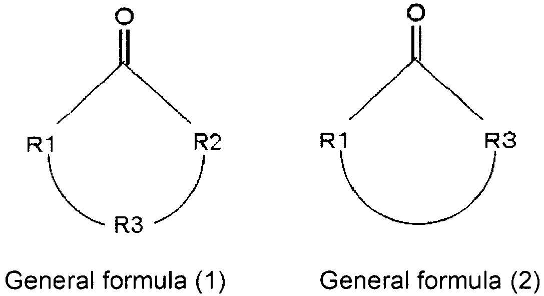
R₇-(OX¹)ₓ-O-R₈ General formula (3)
R₉-(OX¹)ₓ-COOCH₃ General formula (4)
CH₃CO(OX¹)ₓOCOCH₃ General formula (5)
CₓH₂ₓ₊₁-O-COCH(CH₃)OH General formula (6)
R₁₀-O-C₂H₄-CON(R₁₁)₂ General formula (7)
wherein R₁ and R₂ are each independently -NR₆- or an oxygen atom,
R₃ is a hydrocarbon group represented by CₘHₙ, m represents an integer of 2 to 8, n represents an integer of 2m-4, 2m-2, or 2m, the hydrocarbon group may have a branched structure, and
R₆ represents an alkyl group having 1 to 3 carbon atoms, a hydroxyalkyl group, a hydroxyl group, or a hydrogen atom;
R₇, R₉, R₁₀, and R₁₁ represent a hydrocarbon group composed of single bonds only and having 1 to 5 carbon atoms, and may have a branched structure;
R₈ represents a hydrogen atom or a hydrocarbon group composed of single bonds only and having 1 to 5 carbon atoms, and may have a branched structure;
X¹ represents a hydrocarbon group composed of single bonds only and having 2 to 4 carbon atoms, and may have a branched structure;
x represents an integer of 1 to 4.

## Patentansprüche

1. Mit aktiven Energiestrahlen härtbare Tintenstrahltinte, umfassend ein organisches Lösungsmittel mit einem Siedepunkt von 140 °C bis 300 °C, ein polymerisierbares Monomer, das 2-(2-Vinyloxyethoxy)ethylacrylat enthält, und ein Pigment,
wobei ein Gehalt des organischen Lösungsmittels 0,1 bis 10 Gew.-%, bezogen auf das Gesamtgewicht der Tinte, beträgt, und
wobei das organische Lösungsmittel wenigstens eines, ausgewählt aus der Gruppe bestehend aus dem organischen Lösungsmittel, das durch eine der folgenden allgemeinen Formeln (1) bis (7) wiedergegeben ist, Alkandiolen und cyclischen Ethern, umfasst 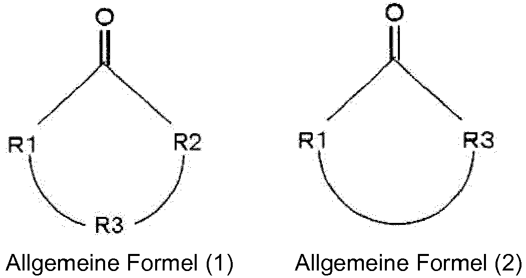
R₇-(OX¹)ₓ-O-R₈ Allgemeine Formel (3)
R₉-(OX¹)ₓ-COOCH₃ Allgemeine Formel (4)
CH₃CO(OX¹)ₓOCOCH₃ Allgemeine Formel (5)
CₓH₂ₓ₊₁-O-COCH(CH₃)OH Allgemeine Formel (6)
R₁₀-O-C₂H₄-CON(R₁₁)₂ Allgemeine Formel (7)
wobei R₁ und R₂ jeweils unabhängig -NR₆- oder ein Sauerstoffatom sind,
R₃ eine Kohlenwasserstoffgruppe ist, die durch CₘHₙ wiedergegeben ist, m eine ganze Zahl von 2 bis 8 bedeutet, n eine ganze Zahl von 2m-4, 2m-2 oder 2m bedeutet, die Kohlenwasserstoffgruppe eine verzweigte Struktur aufweisen kann, und
R₆ eine Alkylgruppe mit 1 bis 3 Kohlenstoffatomen, eine Hydroxyalkylgruppe, eine Hydroxylgruppe oder ein Wasserstoffatom bedeutet;
R₇, R₉, R₁₀ und R₁₁ eine Kohlenwasserstoffgruppe bedeuten, die nur aus Einfachbindungen zusammengesetzt ist und 1 bis 5 Kohlenstoffatome aufweist und eine verzweigte Struktur aufweisen kann;
R₈ ein Wasserstoffatom oder eine Kohlenwasserstoffgruppe bedeutet, die nur aus Einfachbindungen zusammengesetzt ist und 1 bis 5 Kohlenstoffatome aufweist und eine verzweigte Struktur aufweisen kann;
X¹ eine Kohlenwasserstoffgruppe bedeutet, die nur aus Einfachbindungen zusammengesetzt ist und 2 bis 4 Kohlenstoffatome aufweist und eine verzweigte Struktur aufweisen kann;
x eine ganze Zahl von 1 bis 4 bedeutet,
wobei das Pigment ein oder mehrere Pigmente, ausgewählt aus der Gruppe bestehend aus Ruß und einem organischen Pigment, umfasst.

2. Mit aktiven Energiestrahlen härtbare Tintenstrahltinte nach Anspruch 1, wobei das polymerisierbare Monomer außerdem ein polymerisierbares Monomer mit einem Ethylenoxid-modifizierten oder Propylenoxid-modifizierten Gerüst umfasst, das von dem 2-(2-Vinyloxyethoxy)ethylacrylat verschieden ist.

3. Mit aktiven Energiestrahlen härtbare Tintenstrahltinte nach Anspruch 1 oder 2, wobei das polymerisierbare Monomer ein monofunktionelles Monomer in einer Menge von 50 Gew.-% oder weniger, bezogen auf das Gesamtgewicht der Tinte, enthält.

4. Mit aktiven Energiestrahlen härtbare Tintenstrahltinte nach einem der Ansprüche 1 bis 3, wobei der Gehalt des organischen Lösungsmittels 0,2 bis 4 Gew.-%, bezogen auf das Gesamtgewicht der Tinte, beträgt.

5. Mit aktiven Energiestrahlen härtbare Tintenstrahltinte nach Anspruch 2, wobei das polymerisierbare Monomer mit einem Ethylenoxid-modifizierten oder Propylenoxid-modifizierten Gerüst, das von dem 2-(2-Vinyloxyethoxy)ethylacrylat verschieden ist, ein polyfunktionelles Monomer ist und die Menge des polyfunktionellen Monomers, das von dem 2-(2-Vinyloxyethoxy)ethylacrylat verschieden ist, 20 Gew.-% oder mehr, bezogen auf das Gesamtgewicht der Tinte, beträgt.

6. Mit aktiven Energiestrahlen härtbare Tintenstrahltinte nach Anspruch 1 oder 2, wobei das polymerisierbare Monomer außerdem Dipropylenglycoldi(meth)acrylat umfasst.

7. Mit aktiven Energiestrahlen härtbare Tintenstrahltinte nach einem der Ansprüche 1 bis 6, wobei das organische Lösungsmittel wenigstens eines, ausgewählt aus der Gruppe bestehend aus den organischen Lösungsmitteln, die durch eine der allgemeinen Formeln (3), (4) und (5) wiedergegeben sind, umfasst.

8. Mit aktiven Energiestrahlen härtbare Tintenstrahlklartinte, umfassend ein organisches Lösungsmittel mit einem Siedepunkt von 140 °C bis 300 °C und ein polymerisierbares Monomer, das 2-(2-Vinyloxyethoxy)ethylacrylat enthält,
wobei ein Gehalt des organischen Lösungsmittels 0,1 bis 10 Gew.-%, bezogen auf das Gesamtgewicht der Tinte, beträgt, und
wobei das organische Lösungsmittel wenigstens eines, ausgewählt aus der Gruppe bestehend aus dem organischen Lösungsmittel, das durch eine der folgenden allgemeinen Formeln (1) bis (7) wiedergegeben ist, Alkandiolen und cyclischen Ethern, umfasst 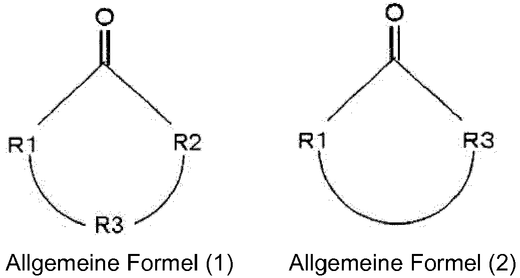
R₇-(OX¹)ₓ-O-R₈ Allgemeine Formel (3)
R₉-(OX¹)ₓ-COOCH₃ Allgemeine Formel (4)
CH₃CO(OX¹)ₓOCOCH₃ Allgemeine Formel (5)
CₓH₂ₓ₊₁-O-COCH(CH₃)OH Allgemeine Formel (6)
R₁₀-O-C₂H₄-CON(R₁₁)₂ Allgemeine Formel (7)
wobei R₁ und R₂ jeweils unabhängig -NR₆- oder ein Sauerstoffatom sind,
R₃ eine Kohlenwasserstoffgruppe ist, die durch CₘHₙ wiedergegeben ist, m eine ganze Zahl von 2 bis 8 bedeutet, n eine ganze Zahl von 2m-4, 2m-2 oder 2m bedeutet, die Kohlenwasserstoffgruppe eine verzweigte Struktur aufweisen kann, und
R₆ eine Alkylgruppe mit 1 bis 3 Kohlenstoffatomen, eine Hydroxyalkylgruppe, eine Hydroxylgruppe oder ein Wasserstoffatom bedeutet;
R₇, R₉, R₁₀ und R₁₁ eine Kohlenwasserstoffgruppe bedeuten, die nur aus Einfachbindungen zusammengesetzt ist und 1 bis 5 Kohlenstoffatome aufweist und eine verzweigte Struktur aufweisen kann;
R₈ ein Wasserstoffatom oder eine Kohlenwasserstoffgruppe bedeutet, die nur aus Einfachbindungen zusammengesetzt ist und 1 bis 5 Kohlenstoffatome aufweist und eine verzweigte Struktur aufweisen kann;
X¹ eine Kohlenwasserstoffgruppe bedeutet, die nur aus Einfachbindungen zusammengesetzt ist und 2 bis 4 Kohlenstoffatome aufweist und eine verzweigte Struktur aufweisen kann;
x eine ganze Zahl von 1 bis 4 bedeutet.

## Revendications

1. Encre pour jet d'encre durcissable par un rayonnement d'énergie active comprenant un solvant organique ayant un point d'ébullition de 140 °C à 300 °C, un monomère polymérisable contenant de l'acrylate de 2-(2-vinyloxyéthoxy)éthyle, et un pigment,
dans laquelle une teneur du solvant organique va de 0,1 à 10 % en poids par rapport au poids total de l'encre, et
dans laquelle le solvant organique comprend au moins l'un choisi dans le groupe constitué du solvant organique représenté par l'une quelconque des formules générales (1) à (7), d'alcanediols et d'éthers cycliques, 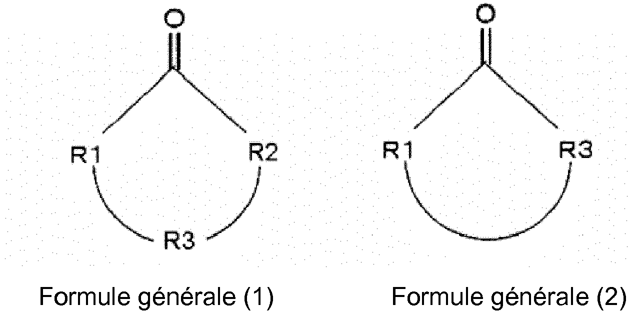
R₇-(OX¹)ₓ-O-R₈ Formule générale (3)
R₉-(OX¹)ₓ-COOCH₃ Formule générale (4)
CH₃CO(OX¹)ₓOCOCH₃ Formule générale (5)
CₓH₂ₓ₊₁-O-COCH(CH₃)OH Formule générale (6)
R₁₀-O-C₂H₄-CON(R₁₁)₂ Formule générale (7)
où R₁ et R₂ sont chacun indépendamment -NR₆- ou un atome d'oxygène,
R₃ est un groupe hydrocarbure représenté par CₘHₙ, m représente un entier de 2 à 8, n représente un entier égal à 2m - 4, 2m - 2 ou 2m, le groupe hydrocarbure peut avoir une structure ramifiée et
R₆ représente un groupe alkyle ayant de 1 à 3 atomes de carbone, un groupe hydroxyalkyle, un groupe hydroxyle, ou un atome d'hydrogène ;
R₇, R₉, R₁₀ et R₁₁ représentent un groupe hydrocarbure composé uniquement de liaisons simples et ayant de 1 à 5 atomes de carbone, et peuvent avoir une structure ramifiée ;
R₈ représente un atome d'hydrogène, un groupe hydrocarbure composé uniquement de liaisons simples et ayant de 1 à 5 atomes de carbone, et peut avoir une structure ramifiée ;
X¹ représente un groupe hydrocarbure composé uniquement de liaisons simples et ayant de 2 à 4 atomes de carbone, et peut avoir une structure ramifiée ;
x représente un entier de 1 à 4,
le pigment comprenant un ou plusieurs pigments choisis dans le groupe constitué de noir de carbone et d'un pigment organique.

2. Encre pour jet d'encre durcissable par un rayonnement d'énergie active selon la revendication 1, dans laquelle le monomère polymérisable comprend en outre un monomère polymérisable ayant un squelette modifié par l'oxyde d'éthylène ou modifié par l'oxyde de propylène autre que l'acrylate de 2-(2-vinyloxyéthoxy)éthyle.

3. Encre pour jet d'encre durcissable par un rayonnement d'énergie active selon la revendication 1 ou 2, dans laquelle le monomère polymérisable contient un monomère monofonctionnel en une quantité de 50 % en poids ou moins par rapport au poids total de l'encre.

4. Encre pour jet d'encre durcissable par un rayonnement d'énergie active selon l'une quelconque des revendications 1 à 3, dans laquelle la teneur du solvant organique va de 0,2 à 4 % en poids par rapport au poids total de l'encre.

5. Encre pour jet d'encre durcissable par un rayonnement d'énergie active selon la revendication 2, dans laquelle le monomère polymérisable ayant un squelette modifié par l'oxyde d'éthylène ou modifié par l'oxyde de propylène autre que l'acrylate de 2-(2-vinyloxyéthoxy)éthyle est un monomère polyfonctionnel, et la quantité du monomère polyfonctionnel autre que l'acrylate de 2-(2-vinyloxyéthoxy)éthyle est de 20 % en poids ou plus par rapport au poids total de l'encre.

6. Encre pour jet d'encre durcissable par un rayonnement d'énergie active selon la revendication 1 ou 2, dans laquelle le monomère polymérisable comprend en outre du di(méth)acrylate de dipropylène glycol.

7. Encre pour jet d'encre durcissable par un rayonnement d'énergie active selon l'une quelconque des revendications 1 à 6, dans laquelle le solvant organique comprend au moins l'un choisi dans le groupe constitué des solvants organiques représentés par l'une quelconque des formules générales (3), (4) et (5).

8. Encre transparente pour jet d'encre durcissable par un rayonnement d'énergie active comprenant un solvant organique ayant un point d'ébullition de 140 °C à 300 °C, et un monomère polymérisable contenant de l'acrylate de 2-(2-vinyloxyéthoxy)éthyle,
dans laquelle une teneur du solvant organique va de 0,1 à 10 % en poids par rapport au poids total de l'encre, et
dans laquelle le solvant organique comprend au moins l'un choisi dans le groupe constitué du solvant organique représenté par l'une quelconque des formules générales (1) à (7), d'alcanediols et d'éthers cycliques, 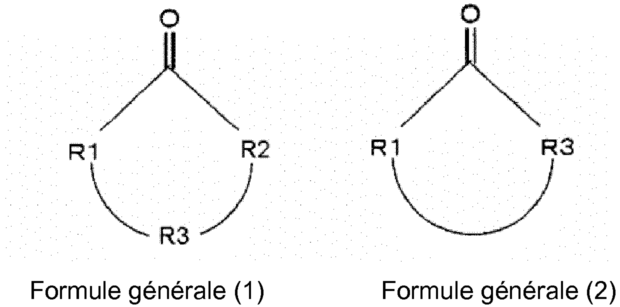
R₇-(OX¹)ₓ-O-R₈ Formule générale (3)
R₉-(OX¹)ₓ-COOCH₃ Formule générale (4)
CH₃CO(OX¹)ₓOCOCH₃ Formule générale (5)
CₓH₂ₓ₊₁-O-COCH(CH₃)OH Formule générale (6)
R₁₀-O-C₂H₄-CON(R₁₁)₂ Formule générale (7)
où R₁ et R₂ sont chacun indépendamment -NR₆- ou un atome d'oxygène, R₃ est un groupe hydrocarbure représenté par CₘHₙ, m représente un entier de 2 à 8, n représente un entier égal à 2m - 4, 2m - 2 ou 2m, le groupe hydrocarbure peut avoir une structure ramifiée et
R₆ représente un groupe alkyle ayant de 1 à 3 atomes de carbone, un groupe hydroxyalkyle, un groupe hydroxyle, ou un atome d'hydrogène ;
R₇, R₉, R₁₀ et R₁₁ représentent un groupe hydrocarbure composé uniquement de liaisons simples et ayant de 1 à 5 atomes de carbone, et peuvent avoir une structure ramifiée ;
R₈ représente un atome d'hydrogène, un groupe hydrocarbure composé uniquement de liaisons simples et ayant de 1 à 5 atomes de carbone, et peut avoir une structure ramifiée ;
X¹ représente un groupe hydrocarbure composé uniquement de liaisons simples et ayant de 2 à 4 atomes de carbone, et peut avoir une structure ramifiée ;
x représente un entier de 1 à 4.
